# EUROPEAN PATENT APPLICATION

(11) **EP 1 939 114 A1**
(43) Date of publication of application: **02.07.2008**
(21) Application number: 07122794.6
(22) Date of filing: 10.12.2007
(51) Int. Cl.: B65G 1/04, B65G 1/06

(54) **Device for the automatic storage of a load unit in a storage rail**

(30) Priority: 29.12.2006 IT BG20060068
(71) Applicant: Automha S.r.l., 24052 Azzano S. Paolo (BG) (IT)
(72) Inventor: Del Popolo, Paolo, 24040 Levate (BG) (IT); Danne, Walter, 20047 Brugherio (MI) (IT)
(74) Representative: Giavarini, Francesco

(57) **Abstract**

The present invention relates to a device for the automatic storage of a load unit along a storage rail of an automated warehouse. The device (1) according to the invention comprises a chassis (6) provided with a plurality of wheels (10A, 10B) which allow translation of the device along a storage rail. A platform (7) is instead predisposed for the purpose of providing a supporting surface (7A) for a load unit. The device comprises first moving means (11) associated with the chassis (6) and operatively connected to one or more of said wheels (10A, 10B) to perform translation of the device (1) along the storage rail. The device (1) according to the invention also comprises second moving means (31) associated with the chassis (6) and operatively connected to the platform (7). These second moving means (12) move the platform (7) with respect to the chassis (6) between a first and a second lifting position. In particular, during this movement of the platform (7) the chassis (6) maintains a fixed position with respect to the moving wheels (10A, 10B).

## Description

The present invention relates to a device for the automatic storage of a load unit in a storage rail which can, for example, be a rail of an automated warehouse.

In recent years the use of automated warehouses structured to allow automatic storage of load units has become widespread. Among the different types of automatic warehouses, there is a particular demand for those commonly called "drive in". These warehouses are designed to store products with cyclical movement and employ load bearing structures combined with specific moving and guide systems for the load units. As it is known, drive-in racking allows improved use of space compared to other types of racking as, for example, it eliminates retrieval aisles. Warehouses of this type also prove to be extremely productive when moving a large number of load units of the same article code in sequence, i.e. according to the known LIFO (Last in-First out) method.

From a constructional viewpoint, therefore, drive-in racking comprises a shoulders and uprights structure which define a plurality of storages rails of dimensions that vary in function of the loads to be handled. In the most modem versions, the load units are placed/retrieved along/from these rails by automatic devices. In practice these devices deposit, automatically and in series, a plurality of load units on supporting guides provided on opposite sides along the storage rail. In more detail, this deposit is performed starting from one end of a rail or in any case from the first free position located on the rail. The load unit is placed on the device by an operator or alternatively by an automatic means. The device maintains the load raised with respect to the supporting guides until reaching the storage position. Subsequently the device lowers the load so that it rests on said guides.

Naturally, these devices also allow retrieval of the load units present on the rail according to corresponding methods.

An example of a prior art storage device is described in patent application WO 2004/039701. In particular, this device essentially comprises a chassis supported by a plurality of moving wheels. A platform is provided to support a load unit, while a lifting system allows lifting of the platform and consequently of the load during movement of the carriage along the storage rail. More specifically, the lifting system used, by levering on the moving wheels, lifts not only the platform and the load, but also the chassis. In other words, by virtue of complex kinematic mechanisms, this lifting system lifts all the masses in play apart from the moving wheels.

This lifting principle is obviously disadvantageous for various reasons. Firstly, it is evident that in order to perform its function, i.e. to lift all the masses in play, the kinematic mechanism utilized is evidently complex and difficult to produce due to the stresses it must withstand. This aspect obviously implies unfavorably high production and assembly costs.

Another negative aspect of the storage device in question is consequently connected to the reliability and duration, which are closely influenced by the stresses to which the mechanical parts of the lifting system are subjected. It is clear that the choice to lift all the masses has negative repercussions on these aspects, consequently causing other disadvantages, such as the need to perform relatively frequent checks and maintenance operations aimed at correcting the deterioration and wear of the components constituting the lifting mechanism.

Another negative aspect of the storage device in question, also common to other prior art devices in the sector, is the fact that during retrieval of a load unit lifting thereof is often accompanied by a contact (i.e. rubbing) with the adjacent load unit positioned on the guide. This operational defect occurs as lifting is always performed in an exclusively vertical direction. It is evident that the relatively intense contact between two load units must also be considered a drawback, both in relation to the integrity of the load unit and as regards possible movements that could derive from these contacts.

On the basis of these considerations there is clearly the need to provide a device for the automatic storage of load units that is more efficient than current ones both in terms of production and assembly costs and in terms of performance and reliability. Therefore, the principal aim of the object of the present invention is to provide a device for the automatic storage of a load unit that allows the aforesaid problems to be solved.

Within the scope of this aim, an object of the present invention is to provide a device with a configuration which is compact and easy to produce.

Another object of the present invention is to provide a device that prevents a first load unit being lifted from coming into contact with a second load unit present on the rail.

Yet another object of the present invention is to provide a device for the automatic storage of load units which is highly reliable and easy to produce at competitive costs.

This aim, and said and other relative objects that will be more apparent below, are achieved through a device for the automatic storage of a load unit comprising:
- a chassis provided with a plurality of wheels suitable to allow translation of the device along a storage rail;
- a platform suitable to provide a supporting surface for a load unit;
- first moving means associated with the chassis and operatively connected to one or more wheels to perform translation of the device.

The device according to the invention is characterized in that it comprises second moving means associated with the chassis and operatively connected to the platform so as to move this platform with respect to the chassis between a first and a second lifting position. In particular, during movement of the platform the chassis maintains a fixed position with respect to the wheels.

The device according to the invention is therefore distinguished by the use of second moving means, advantageously configured so as to lift only the masses strictly necessary (the load unit and the platform) without lifting the chassis and the other secondary masses associated therewith. Obviously, the reduction in the masses in play during lifting implies, with the same load unit, fewer stresses on structural parts with evident advantages from the viewpoint of reliability and duration of the device.

Further characteristics and advantages of the invention will be more apparent from the description of preferred, but not exclusive, embodiments of the device for the storage of a load unit according to the invention, shown by way of non-limiting examples in the accompanying drawings, wherein:
- Figure 1 is a perspective view of a possible embodiment of a storage device according to the present invention;
- Figure 2 is an exploded perspective view of the storage device in Figure 1;
- Figure 3 is an exploded side view of the device in Figure 2;
- Figure 4 is a view of some components of the storage device in Figure 1;
- Figure 5 is a plan view of the components shown in Figure 4;
- Figure 6 is a side view of the components shown in Figure 5;
- Figure 7 is a view according to the line VII-VII in Figure 5;
- Figure 8 is a view according to the line VIII-VIII in Figure 5;
- Figures 9A and 9B are first side views showing the second moving means respectively in two different lifting positions;
- Figures 10A and 10B are further views showing, according to different observation points, the second moving means shown in Figure 9A and 9B.

With reference to the Figures, the device 1 according to the invention comprises a chassis 6 provided with a plurality of wheels 10A, 10B which allow translation of this device 1 along a storage rail, which can be, for example, a rail of an automated warehouse of the "drive-in" type. It must be understood that the device can also be used in other applications or in all those cases in which, for example, there is the need to automatically store a plurality of load units on a specific rail.

The device 1 comprises a platform 7 configured to provide a supporting surface 7A for a load unit. The dimensions of the platform 7, and those of the whole device 1, can advantageously vary in function of the dimensions and of the type of load to be stored.

Translation of the device 1 along the storage rail is performed through first moving means 11 which are associated with the chassis 6 and at the same time operatively connected to one or more of said wheels 10A, 10B. In practice, the first moving means 11 are designed to supply the energy required to move the wheels, and consequently the device 1, along the storage rail.

The device 1 according to the invention is characterized in that it comprises second moving means 31 associated with the chassis 6 and operatively connected to the platform 7. In particular, these second means 31 are configured so as to move the platform 7 with respect to the chassis 6 between a first and a second lifting position. The device 1 according to the invention is also characterized in that the chassis 6 maintains a fixed position with respect to the wheels 10A, 10B during movement of the platform 7 between the two lifting positions. The position of the chassis 6 in fact remains unchanged with respect to the rotation axes of the wheels 10A, 10B. As already mentioned above, this technical solution is extremely advantageous since these second moving means 31 actually only move the masses of the platform 7 and of the load unit. Differently from what occurs in some conventional devices, the chassis 6 and the wheels 7 in fact remain mutually fixed during operation of the second moving means 31. The masses moved by the second moving means 31 in substance represent the totality of the masses that must obviously be moved to justify operation of the device 1.

In order to control the first 11 and the second 31 moving means, the device 1 comprises a control unit 27 associated with the chassis 6 and detection means operatively connected to the control unit 27. More precisely, these detection means generate one or more control signals each of which characteristic of an operating variable of the device 1. Operating variable is intended, for example, as the position of the device 1 with respect to the storage rail or the position of the platform with respect to the chassis 6. Obviously, the control unit 27 automatically controls the first and the second moving means 11, 31 in function of these control signals. In turn, the control unit 27 can be programmed and controlled by an operator, i.e. through remote controls.

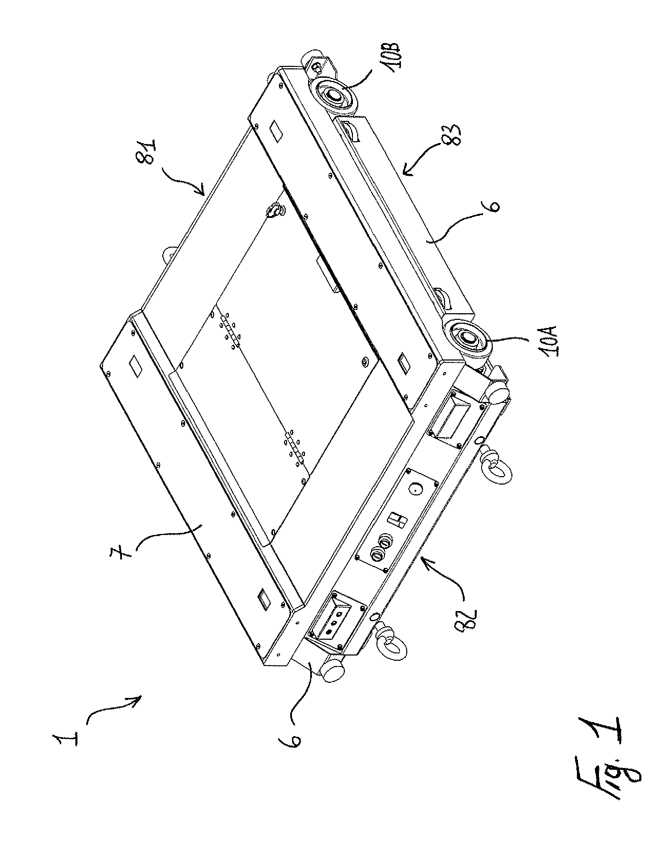

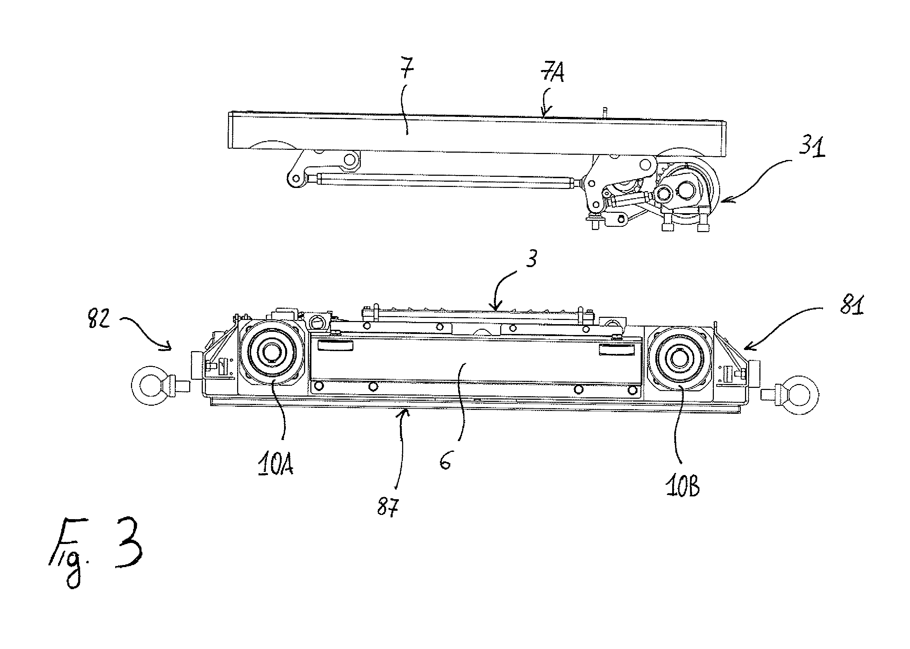

Figure 1 is a perspective view of a possible embodiment of a device 1 according to the present invention. The chassis 6 is distinguished by a substantially rectangular prismatic configuration. In particular, this configuration comprises a front side 81, a rear side 82 and a pair of lateral sides 83 extending one parallel to the other between the front side 81 and the rear side 82. The chassis 6 also comprises a base 87 (see Figure 3) to support the various components constituting the device 1. As can be seen in Figure 1, the lateral sides 83 can advantageously be provided with one or more lateral sliding wheels 13 having the function of facilitating translation of the device along the storage rail.

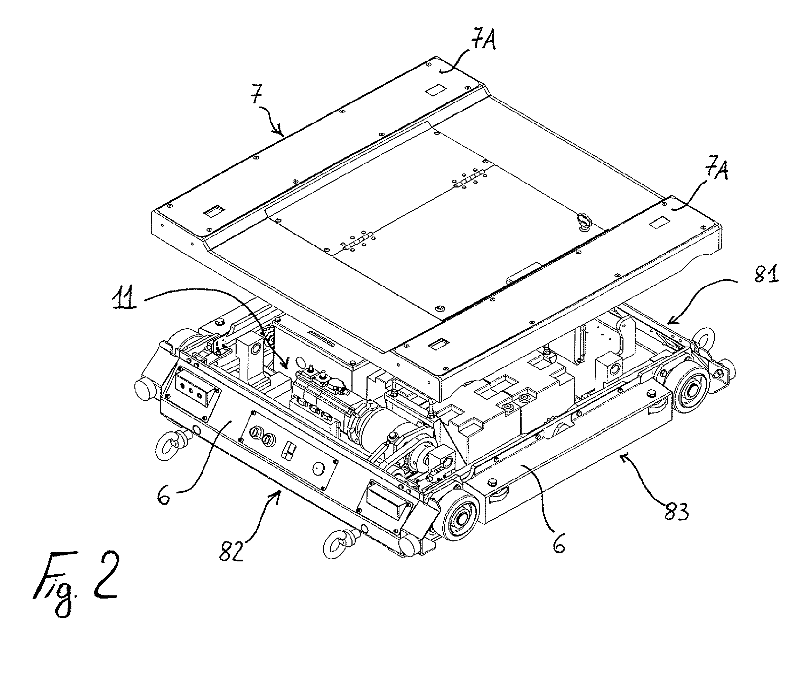

Figures 2 and 3 are respectively perspective and side exploded views of the device in Figure 1 and show the platform 7 separated from the chassis 6. As already mentioned above, the first 11 and the second 31 moving means are both associated with the chassis 6. With the expression "associated" it is intended that these means move while remaining connected, with at least one part thereof, to the chassis 6. With particular reference to Figure 3, according to a preferred embodiment of the invention, the device 1 comprises a power supply unit 3 (for example formed by a series of gel batteries to guarantee operation even in refrigerated environments) associated with the chassis 6 and operatively connected to the control unit 27, to the detection means, to the first 11 and to the second 31 moving means.

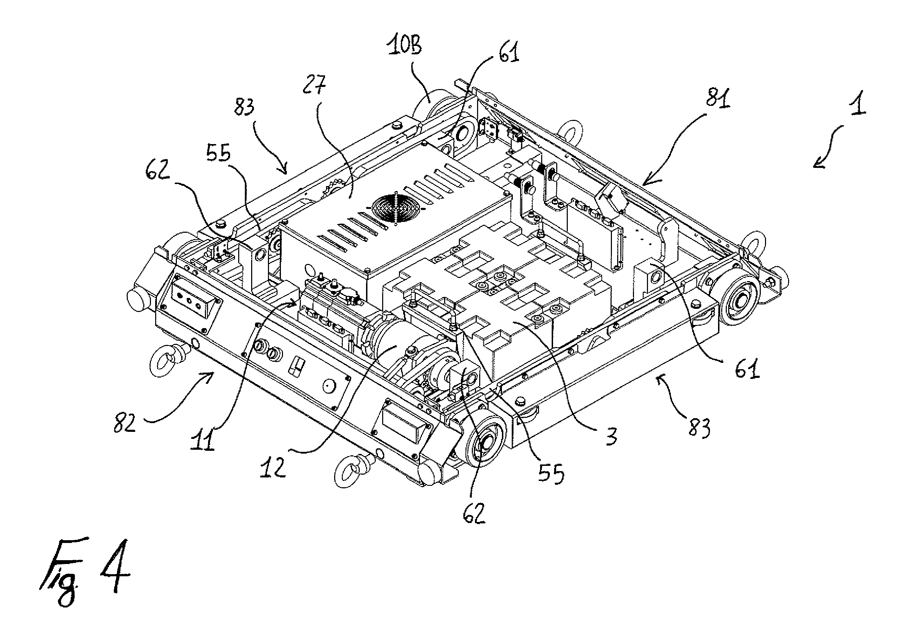

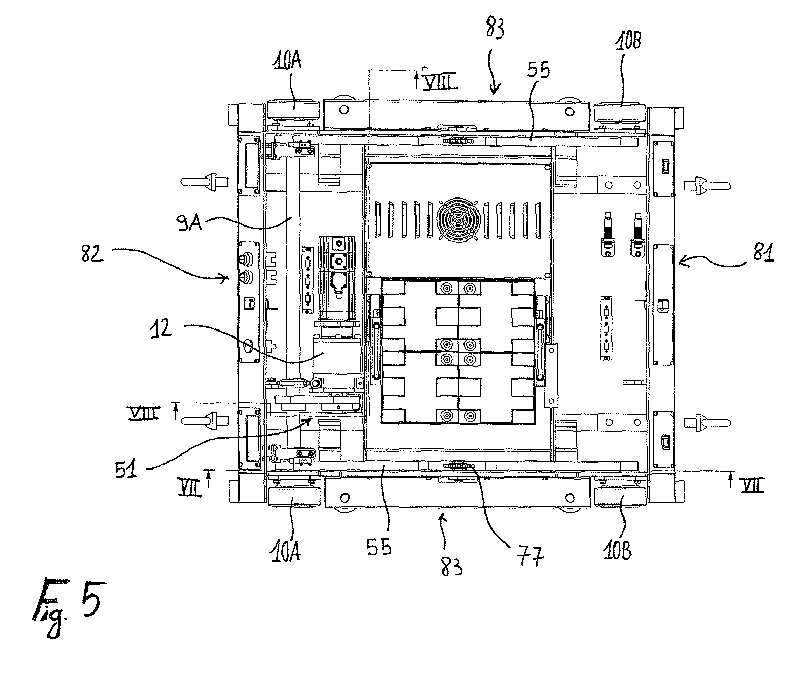

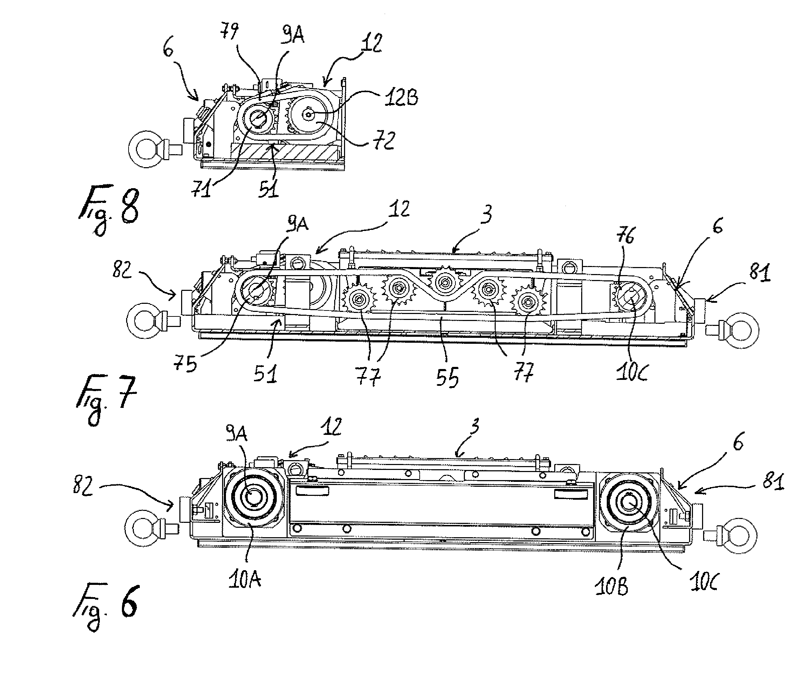

Figures 4 to 8 show the chassis 6 of the device 1 according to the invention shown in Figure 1. In particular, these figures allow detailed observation of a possible embodiment of the first moving means 11 of the device 1. These means comprise a first actuator 12 (constituted, for example, by an electric motor) operatively connected to one or more of said wheels 10A through first transmission means 51. With reference in particular to the plan view in Figure 6, the first transmission means 51 comprise a first rotation shaft 9A associated with the chassis 6 and configured to support, at the ends thereof, a first pair of wheels 10A. The first transmission means 51 also comprise a first kinematic transmission that connects the first rotation shaft 9A to the first actuator 12, so that the first rotation shaft 9A is made to rotate by the motion produced by the first actuator 12.

With particular reference to the views in Figure 8, according to a preferred embodiment of the invention, the first kinematic chain comprises a transmission chain 79 connecting a first gear wheel 71 fitted on the first rotation shaft 9A and a second gear wheel 72 fitted on a motor shaft 12B of said first actuator 12. In practice, the motion of said motor shaft 12B is transferred to the first rotation shaft 9A through a transmission with axes substantially parallel. Rotation of the first motor shaft 9A is translated in turn into a rotation of the first pair of wheels 10A which in substance become driving wheels for the device 1.

With reference in particular to Figure 7, in a possible embodiment of the device 1, the first transmission means 51 comprise a second kinematic transmission which operatively connects the first rotation shaft 9A to a second pair of wheels 10B, each in a position substantially opposite the wheels of the first pair 10A, i.e. (as shown) along one of said lateral sides 83 in a position in the vicinity of the front side 81. More specifically, this second kinematic transmission comprises a pair of chains 55 each of which operatively connects an idler wheel 75 fitted on the first shaft 9A to a toothed pinion 76 fitted on the shaft 10C of one of the two wheels of the second pair of wheels. By means of this solution, the device 1 in substance has four wheels that can be defined as "driving", made to rotate through a common actuator. This solution naturally increases the stability of the translatory motion of the device 1.

As shown in Figure 7, this second kinematic transmission can advantageously be integrated by one or more intermediate gear wheels 77 having the function of tensioning or in any case of guaranteeing correct use of the two chains. These intermediate gear wheels 77 are associated rotatingly with the lateral sides 83 of the chassis 6 so as to second the transmission.

From the solution illustrated above, it can be understood that the first moving means 11 transfer motion to the driving wheels 10A, 10B through the use of transmissions with parallel axes and particularly by making use of chain transmissions. It must be understood that these types of transmissions could obviously be replaced by others functionally equivalent, such as with belts, the use of which must therefore also be considered as falling within the scope of the inventive concept.

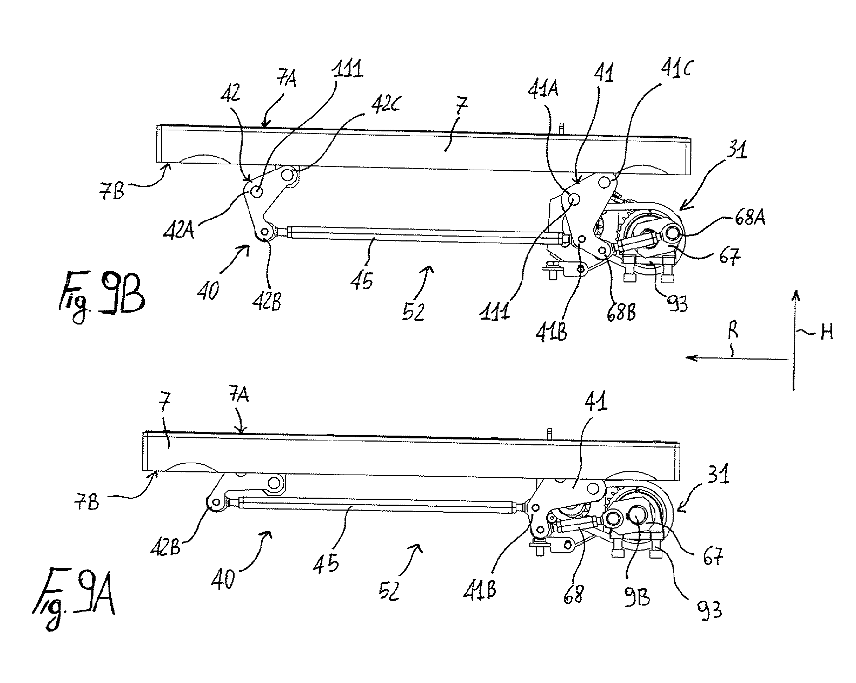

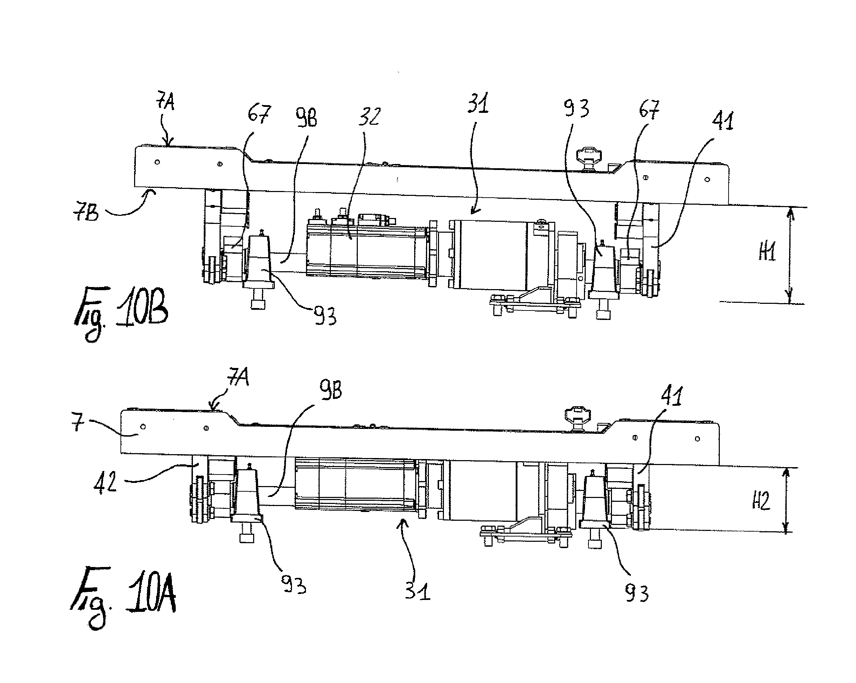

Figures 9A, 9B, 10A and 10B show a possible configuration of the second moving means 31 which, as indicated above, allow movement of the platform 7 between a first and a second lifting position. More specifically, Figures 9A and 10A show, according to different observation points, the second moving means 31 in one of the two lifting positions, while the Figures 9B and 10B show the same means in the other position.

According to the solution shown in these figures, the second moving means 31 comprise a second actuator 32 operatively connected to the platform 7 through second transmission means 52 so that the motion of this actuator is translated into a corresponding motion of the platform 7.

As shown, the second transmission means 52 comprise a second rotation shaft 9B associated with the chassis 6 through a pair of supports 93 which in substance define the rotation axis of the second shaft 9B. It must be stressed that the supports 93 are actually fixed parts of the chassis 6 as they are connected firmly thereto. In the figures in question, these supports 93 are represented as separated from the chassis 6 purely for descriptive purposes. From comparing Figures 10A and 10B it can be observed that in the second lifting position the platform 7 is placed at a height H1 (measured with respect to the base of the supports 93) higher than the height H2 taken in the first lifting position by virtue of the action of the second moving means 31.

The second transmission means 52 also comprise a kinematic structure which operatively connects the second rotation shaft 9B to the platform 7 and which is configured so as to transform rotation of the second shaft 9B in a translation of the platform 7 between the first and the second lifting position.

With particular reference to Figures 9A and 9B, this kinematic structure comprises a pair of articulated mechanisms 40 associated, on opposite sides, with a lower surface 7B of the platform 7 substantially opposite the supporting surface 7A intended to support a load. Each articulated mechanism 40 comprises a first 41 and a second 42 lever hinged, at a first portion 41A, 42A thereof, respectively to a first 61 and to a second 62 supporting bushing (see Figure 4) of the chassis 6 which configure a rotation axis 111 for each corresponding lever 41, 42.

The two levers 41 and 42 are mutually connected through a connection rod 45 at a second portion 41B, 42B thereof, so that the movement of one implies a corresponding movement of the other. Each of said levers 41, 42 comprises a third portion 41C, 42C connected to the lower surface of the platform 7 preferably through a jointed connection such as the one shown in Figures 9A and 9B.

The kinematic structure also comprises a pair of connecting rod-crank mechanisms, each of which is operatively connected to one of the articulated mechanisms 40 to transfer the rotational motion of the second motor shaft 9B to the corresponding articulated mechanism 40. Each connecting rod-crank mechanism comprises a crank 67 fitted on the second rotation shaft 9B and a connecting rod 68 connected, at a first end 68A thereof to the crank 67 and at a second end thereof 68B to one of the two levers 41, 42 of one of the two articulated mechanisms 40. The operating principle of the kinematic structure is easily understood by comparing Figures 9A and 9B. The second actuator 12 rotates the second shaft 9B, which in turn drives rotation of the crank 67. Through the connecting rod 68, the crank 67 determines a rotation of the first lever 41 about the corresponding rotation axis 111. Due to the connection rod 45, the second lever 42 also rotates about the rotation axis 111 thereof in concurrence with the first lever 41. Rotation of the two levers 41, 42 determines a shift of the platform 7 with respect to the rotation centers of these levers or with respect to the chassis 6.

The embodiment of the second moving means thus configured, allows totally reliable movement of the platform 7 by virtue of the operating principle and of the configuration of the elements constituting the kinematic structure for transmitting motion. In particular, the structure of the articulated mechanisms 40 performs a translation of the platform 7 on a plane substantially orthogonal to the supporting surface 7A thereof. More specifically, this translation determines lifting/lowering H of the platform 7 with respect to the chassis 6, but also simultaneous movement of the platform according to a direction R orthogonal to the direction of lifting H. This solution is extremely advantageous as it prevents, for example, lateral contact (i.e. by rubbing) between two adjacent load units. This advantage is noted in particular during retrieval of the load units. In fact, during retrieval the device 1 lifts a load unit with respect to the chassis 6, moving this unit away from an adjacent unit.

The technical solutions adopted for the device according to the present invention allow the proposed aims and the objects to be fully achieved. The device thus conceived is extremely reliable by virtue of a lifting principle which advantageously allows stresses involving the structural parts to be limited. The device is also distinguished by a simple configuration, extremely compact and easy to produce, which advantageously allows both production and assembly costs to be limited.

In practice, the materials used and the contingent dimensions and forms can be any, according to requirements and to the state of the art.

## Claims

1. Device (1) for the automatic storage of a load unit, comprising:
- a chassis (6) provided with a plurality of wheels (10A, 10B) suitable to allow translation of said device along a storage rail;
- a platform (7) suitable to provide a supporting surface for said load unit;
- first moving means (11) associated with said chassis (6) and operatively connected to one or more of said wheels (10A, 10B) to perform said translation of said device (1),
**characterized in that** it comprises second moving means (31) associated with said chassis (6) and operatively connected to said platform (7), said second moving means (12) moving said platform (7) with respect to said chassis (6) between a first and a second lifting position, said chassis (6) maintaining a fixed position with respect to said wheels (10A, 10B) during the movement of said platform (7).

2. Device (1) according to Claim 1, **characterized in that** it comprises a control unit (27) associated with said chassis (6) to control said first and said second moving means (11, 31).

3. Device (1) according to Claim 1 or 2, **characterized in that** it comprises detection means operatively connected to said control unit (27) to generate one or more control signals each characteristic of an operating variable of said device (1), said control unit (27) controlling said first and said second moving means in function of said control signals.

4. Device (1) according to one or more of Claims 1 to 3, **characterized in that** it comprises a power supply unit (3) associated with said chassis (6) and operatively connected to said control unit (27), to said detection means and to said first and second moving means (11, 31).

5. Device (1) according to one or more of Claims 1 to 4, **characterized in that** said chassis (6) has a substantially rectangular prismatic configuration, said chassis (6) comprising a front side (81), substantially opposite a rear side (82), and a pair of lateral sides (83) extending between said front side (81) and said rear side (82), said chassis (6) also comprising a base (87) supported by said plurality of wheels (9).

6. Device (1) according to one or more of Claims 1 to 5, **characterized in that** said first moving means (11) comprise a first actuator (12) operatively connected to one or more of said wheels (10A) through first transmissions means (51).

7. Device (1) according to Claim 6, **characterized in that** said first transmission means (51) comprise a first rotation shaft (9A) associated with said chassis (6), at least one pair of wheels (10A) being fitted on said first rotation shaft (9A) which is rotated by said first actuator (12), said first transmission means (51) comprising a first kinematic transmission that connects said first rotation shaft (9A) to said first actuator (12).

8. Device (1) according to Claim 7, **characterized in that** said kinematic transmission comprises a first transmission chain (79) connecting a first gear wheel (71) fitted on said first rotation shaft (9A) to a second gear wheel (72) fitted on a shaft (12B) of said first actuator.

9. Device (1) according to one or more of Claims 6 to 8, **characterized in that** said first transmission means (51) comprise a second kinematic transmission which connects said first rotation shaft (9A) to a second pair of wheels (10B).

10. Device (1) according to Claim 9, **characterized in that** said second kinematic transmission comprises a pair of transmission chains (55) each of which is predisposed to operatively connect an idler wheel (75) fitted on said first rotation shaft (9A) to a toothed pinion (76) fitted on the shaft (10C) of a wheel of said second pair of wheels (10B).

11. Device (1) according to Claim 10, **characterized in that** each of said chains (55) is predisposed in proximity of one of said lateral sides (83) of said chassis (6).

12. Device (1) according to Claim 11, **characterized in that** said second kinematic transmission (52) comprises one or more intermediate gear wheel (77) predisposed to tension said transmission chains (55).

13. Device (1) according to one or more of Claims 1 to 12, **characterized in that** said second moving means (31) comprise a second actuator (32) operatively connected to said platform (7) through second transmission means (52).

14. Device (1) according to Claim 13, **characterized in that** said second transmission means (52) comprise a second rotation shaft (9B) associated with said chassis (6) and operatively connected to said second actuator (32), said second transmission means (52) comprising a kinematic structure which operatively connects said second rotation shaft (9B) to said platform (7), said kinematic structure being configured so as to transform rotation of said second shaft (9B) in a translation of said platform (7) between said first and a said second lifting position.

15. Device (1) according to Claim 14, **characterized in that** it said kinematic structure comprises:
- a pair of articulated mechanisms (40) associated on opposite sides with a lower surface (7B) of said platform (7) substantially opposite the supporting surface (7A) of said load unit, each of said articulated mechanisms (40) comprising a first (41) and a second (42) lever hinged at a first portion (41A, 42A) thereof, respectively to a first (61) and to a second (62) part of said chassis (6), a second portion (41B) of said first lever (41) being connected to a corresponding second portion (42B) of said second lever (42) through a connection rod (45), said levers (41, 42) each comprising a third end portion (41C, 42C) connected to said lower surface (7B) of said platform (7);
- a pair of connecting rod-crank mechanisms, each of which operatively connected to one of said articulated mechanisms (40), each of said connecting rod-crank mechanisms comprising a crank (67) fitted on said second rotation shaft (9B) and a connecting rod (68) connected, at a first end (68A) thereof to said crank (67) and at a second end thereof (68B) to one of said levers (41, 42) of one of said articulated mechanisms (40).
